# EUROPEAN PATENT APPLICATION

(11) **EP 3 836 408 A1**
(43) Date of publication of application: **16.06.2021**
(21) Application number: 20213442.5
(22) Date of filing: 11.12.2020
(51) Int. Cl.: H04B 1/38, H04B 1/40, H04B 1/44

(54) **COMPENSATOR MODULE, CONTROL MODULE, DATA TRANSFER SYSTEM AND METHOD FOR OPERATING A DATA TRANSFER SYSTEM**

(30) Priority: 11.12.2019 DE 102019134013
(71) Applicant: Hirschmann Car Communication GmbH, 72654 Neckartenzlingen (DE)
(72) Inventor: BOEHMERT, Roland, 72764 Reutlingen (DE); STORCH, Florian, 36093 Künzell (DE); SCHAICH, Peter, 72664 Kohlberg (DE)
(74) Representative: Patentanwaltskanzlei WILHELM & BECK

(57) **Abstract**

A compensator module comprises a wanted-signal connection for transferring wanted signals, a radio-frequency module for amplifying the wanted signals, a control-data connection for receiving control data, and a processing unit for processing the control data and for driving the radio-frequency module. The control-data connection is designed to be connected to a digital data network. The processing unit is designed to switch the radio-frequency module between a compensator-module transmit operating mode and a compensator-module receive operating mode according to the received control data.

## Description

The present invention relates to a compensator module, to a control module, to a data transfer system comprising a compensator module and a control module, and to a method for operating a data transfer system.

Compensator modules for compensating cable losses are known from the prior art.

It is an object of the present invention to provide a compensator module. Another object of the present invention is to provide a control module. It is also an object of the present invention to provide a data transfer system comprising a compensator module and a control module. It is also an object of the present invention to provide a method for operating a data transfer system. These objects are achieved by a compensator module, a control module, a data transfer system and a method for operating a data transfer system having the features of the corresponding independent claims. The dependent claims define various developments.

A compensator module comprises a wanted-signal connection for transferring wanted signals, a radio-frequency module for amplifying the wanted signals, a control-data connection for receiving control data, and a processing unit for processing the control data and for driving the radio-frequency module. The control-data connection is designed to be connected to a digital data network. The processing unit is designed to switch the radio-frequency module between a compensator-module transmit operating mode and a compensator-module receive operating mode according to the received control data. In this compensator module, the control data is advantageously transferred separately from the wanted signals. The compensator module can thereby advantageously have a particularly simple design.

In an embodiment of the compensator module, said compensator module comprises an antenna for emitting and receiving the wanted signals. Compensation of cable losses that is performed by the compensator module hence advantageously takes place close to the antenna.

In an embodiment of the compensator module, the control-data connection is designed to be connected to an Ethernet-based data network, to a MOST data network or to a CAN data network. This advantageously makes it possible to transfer the control data via a data network that already exists for other purposes. This means that the compensator module can advantageously be installed particularly simply and economically.

In an embodiment of the compensator module, the wanted-signal connection is designed to be connected to an antenna cable. The antenna cable may be a coaxial cable for instance. This advantageously makes it possible to transfer radio-frequency wanted signals via the wanted-signal connection.

The wanted signals may have a frequency of 5.9 GHz, for example.

In an embodiment of the compensator module, the radio-frequency module comprises a transmit path containing a power amplifier, and a receive path containing a low-noise amplifier. The transmit path is used in the compensator-module transmit operating mode, and the receive path is used in the compensator-module receive operating mode. The compensator module can then advantageously use the power amplifier to amplify the wanted signals in the compensator-module transmit operating mode in order to compensate cable losses. In the compensator-module receive operating mode, the low-noise amplifier can be used to amplify wanted signals received by means of an antenna.

In an embodiment of the compensator module, the processing unit comprises a processor or a microcontroller. This advantageously makes it possible to use software to implement some of the actions performed by the compensator module. The compensator module can hence have a small number of components, making it possible to produce the compensator module economically. A smaller number of components is advantageously associated with lower heat generation as well.

In an embodiment of the compensator module, said compensator module is designed to detect a measured value and to transfer the measured value to the processing unit. The measured value may be, for example, a temperature of an amplifier of the radio-frequency module. The measured value may also be, for example, a signal level of the wanted signal. In this embodiment, the processing unit of the compensator module can advantageously take the measured value into account in driving the radio-frequency module. For example, the processing unit can drive the radio-frequency module of the compensator module such that the wanted signals are amplified to a desired signal level. For instance, it is possible to take into account also a temperature of the amplifier of the radio-frequency module in the selection of a gain.

In an embodiment of the compensator module, the processing unit is designed to transfer the measured value via the control-data connection. The measured value can thereby advantageously be transferred to other components in order to use the measured value in another location.

In an embodiment of the compensator module, the processing unit is designed to drive the radio-frequency module according to the measured value. In this case, the processing unit can be designed, for instance, to adjust a gain of an amplifier of the radio-frequency module according to the measured value.

In an embodiment of the compensator module, said compensator module comprises a voltage-supply connection. A supply voltage can be fed to the compensator module via the voltage-supply connection.

In an embodiment of the compensator module, said compensator module is integrated in a control unit intended for fitting in a motor vehicle. In this case, the compensator module can advantageously use components that are already present in the control unit. For example, the processing unit of the compensator module can comprise a microcontroller or processor that is already present in the control unit. The compensator module can also use a power supply that is already present in the control unit.

In an embodiment of the compensator module, the control unit comprises an integral mobile communications antenna, an integral radio antenna and/or an integral GNSS antenna. Such antennas are advantageously fitted at positions in a motor vehicle that are also suitable for fitting the compensator module.

A control module comprises a wanted-signal connection, a control-data connection and a transfer unit, which is designed alternately to emit wanted signals via the wanted-signal connection in a control-module transmit operating mode, and to receive wanted signals via the wanted-signal connection in a control-module receive operating mode. The control-data connection is designed to be connected to a digital data network. The transfer unit is designed to emit via the control-data connection control data that indicates whether the control module is in the control-module transmit operating mode or in the control-module receive operating mode. In this control module, the wanted signals are advantageously transferred separately from the control data. This means that the control module can advantageously have a particularly simple design.

A data transfer system comprises a compensator module of the aforementioned type and a control module of the aforementioned type. The wanted-signal connection of the compensator module is connected to the wanted-signal connection of the control module. The control-data connection of the compensator module and the control-data connection of the control module are connected to a shared digital data network. In this data transfer system, control data can advantageously be exchanged between the control module and the compensator module via the digital data network. At the same time, the control module and the compensator module can exchange wanted data via their wanted-signal connections. The separation of wanted signals and control data advantageously allows the compensator module and the control module of this data transfer system to have a particularly simple design.

In a method for operating a data transfer system of the aforementioned type, the control module emits via its control-data connection control data that indicates whether the control module is in the control-module transmit operating mode or in the control-module receive operating mode. The compensator module receives the control data via its control-data connection. The processing unit of the compensator module switches the radio-frequency module of the compensator module between the compensator-module transmit operating mode and the compensator-module receive operating mode according to the control data. This method advantageously allows the data transfer system to be operated particularly simply.

The above-described properties, features and advantages of this invention are explained in greater detail below with reference to the accompanying figures, in which, in a schematic diagram in each case,
Fig. 1 shows a data transfer system having a control module and a compensator module;
Fig. 2 shows a radio-frequency module of the compensator module of the data transfer system; and
Fig. 3 shows a system receive operating mode and a system transmit operating mode of the data transfer system.

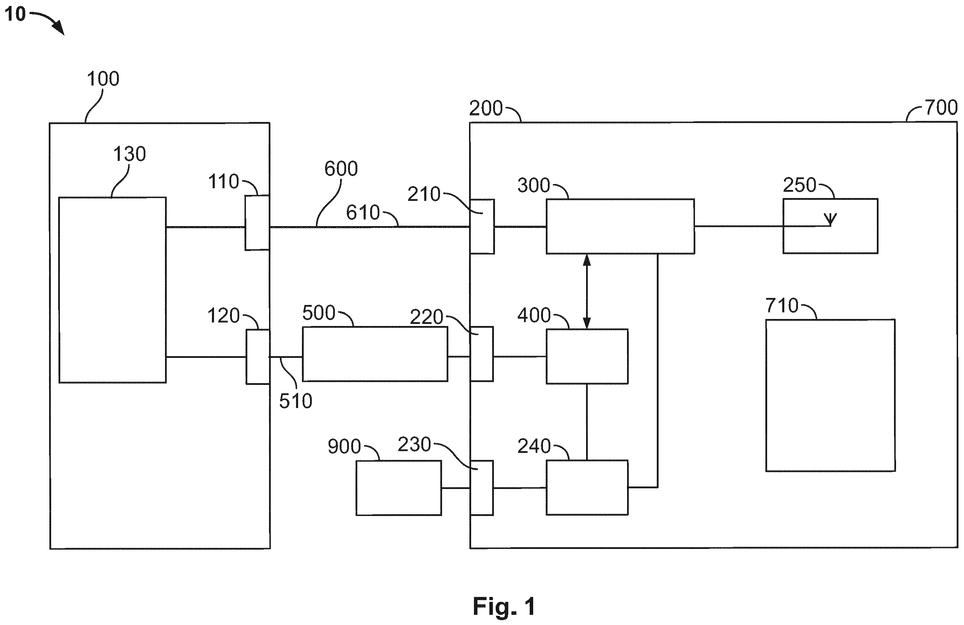

Fig. 1 shows a block diagram of a data transfer system 10. The data transfer system 10 may be arranged in a motor vehicle for example, and may be used for vehicle-to-everything (V2X) communication, for example.

The data transfer system 10 comprises a control module 100 and a compensator module 200. The control module 100 and the compensator module 200 can be arranged separately from one another at different positions in a motor vehicle.

The control module 100 comprises a transfer unit 130. The transfer unit 130 can comprise a baseband processor, for example.

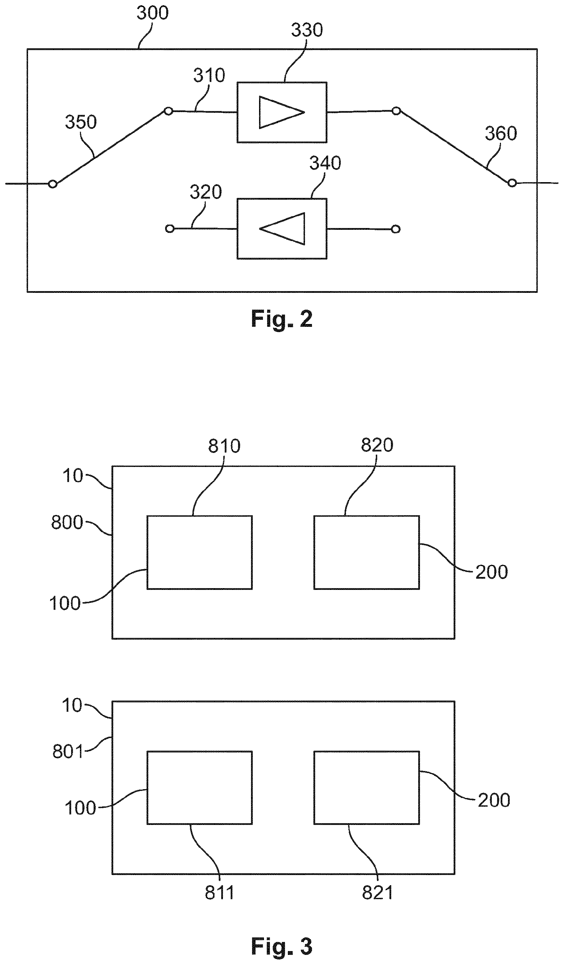

The transfer unit 130 is designed to emit and receive radio-frequency wanted signals 610. The transfer unit 130 emits and receives the radio-frequency wanted signals 610 alternately in time. If the control module 100 is in a control-module transmit operating mode 810, which is shown schematically in Fig. 3, then the transfer unit 130 of the control module 100 is emitting wanted signals 610. If the control module 100 is in a control-module receive operating mode 811, which is shown schematically in Fig. 3, then the transfer unit 130 of the control module 100 is receiving the wanted signals 610. The control-module transmit operating mode 810 and the control-module receive operating mode 811 alternate in time.

The wanted signals 610 may lie, for example, in a UHF transmit frequency band or an SHF transmit frequency band, for instance in a transmit frequency band that includes a frequency of 5.9 GHz.

The control module 100 comprises a wanted-signal connection 110. The control module 100 is connected via the wanted-signal connection 110 to an antenna cable 600. The antenna cable 600 may be a coaxial cable for instance. The transfer unit 130 is connected to the wanted-signal connection 110 such that the transfer unit 130 can emit and receive the wanted signals 610 via the wanted-signal connection 110.

The control module 100 also comprises a control-data connection 120. The control module 100 is connected via the control-data connection 120 to a digital data network 500. The digital data network 500 may be an Ethernet-based data network, a MOST data network or a CAN data network, for example. The control module 100 can exchange data via the digital data network 500 with other modules that are likewise connected to the digital data network 500.

The transfer unit 130 of the control module 100 is designed to emit via the control-data connection 120 control data 510 that indicates whether the control module 100 is in the control-module transmit operating mode 810 or in the control-module receive operating mode 811. For this purpose, the transfer unit 130 of the control module 100 can emit corresponding control data 510 via the control-data connection 120 whenever there is a change between the control-module transmit operating mode 810 and the control-module receive operating mode 811. The transfer unit 130 of the control module 100 can also emit control data 510 periodically indicating whether, at that precise time at which the control data 510 is being emitted, the control module 100 is in the control-module transmit operating mode 810 or in the control-module receive operating mode 811.

As Fig. 1 shows, the compensator module 200 comprises a wanted-signal connection 210, a radio-frequency module 300 and an antenna 250.

The wanted-signal connection 210 of the compensator module 200 is connected to the antenna cable 600. The wanted-signal connection 210 of the compensator module 200 is thereby connected via the antenna cable 600 to the wanted-signal connection 110 of the control module 100.

The radio-frequency module 300 of the compensator module 200 is connected to the wanted-signal connection 210 and to the antenna 250, and is arranged between the wanted-signal connection 210 and the antenna 250.

The compensator module 200 is designed such that in a compensator-module transmit operating mode 820 of the compensator module 200, which operating mode is shown schematically in Fig. 3, it receives via the wanted-signal connection 210 of the compensator module 200 wanted signals 610 emitted by the control module 100 via the wanted-signal connection 110 of the control module 100 and the antenna cable 600, and it emits said wanted signals via the antenna 250 of the compensator module 200. In addition, the compensator module 200 is designed such that in a compensator-module receive operating mode 821 of the compensator module 200, which operating mode is shown schematically in Fig. 3, it receives wanted signals 610 via the antenna 250 of the compensator module 200, and transfers these wanted signals to the control module 100 via the radio-frequency module 300, the wanted-signal connection 210 of the compensator module 200, the antenna cable 600 and the wanted-signal connection 110 of the control module 100.

Fig. 2 shows a block diagram of the radio-frequency module 300 of the compensator module 200 without the other components of the compensator module 200. The radio-frequency module 300 of the compensator module 200 comprises a transmit path 310, via which the wanted signals 610 are routed from the wanted-signal connection 210 to the antenna 250 in the compensator-module transmit operating mode 820. The radio-frequency module 300 also comprises a receive path 320, via which the wanted signals 610 are routed from the antenna 250 to the wanted-signal connection 210 in the compensator-module receive operating mode 821.

The antenna cable 600 arranged between the control module 100 and the compensator module 200 of the data transfer system 10 may have a long length, for instance a length of several metres. As a result, in the control-module transmit operating mode 810 of the control module 100, wanted signals 610 emitted by the control module 100 are attenuated or weakened in the antenna cable 600. This attenuation of the wanted signals 610 must be compensated in the compensator module 200 in order that the wanted signals 610 can be emitted via the antenna 250 of the compensator module 200 at a specified signal strength.

In order to compensate the attenuation of the wanted signals 610 emitted by the control module 100 that occurs in the antenna cable 600, the wanted signals 610 are amplified in the radio-frequency module 300 of the compensator module 200. In the example shown schematically in Fig. 1 and 2, the radio-frequency module 300 comprises for this purpose a power amplifier 330 arranged in the transmit path 310. The radio-frequency module 300 could also comprise other and/or additional amplifiers, however. In addition, the radio-frequency module 300 could comprise, for example, an attenuator arranged in the transmit path 310 and having an adjustable attenuation, as an effective means of adapting the amplification of the wanted signals 610 performed by the radio-frequency module 300 to suit different cable attenuations.

In the example shown schematically in Fig. 1 and 2, the radio-frequency module 300 of the compensator module 200 also comprises a low-noise amplifier 340 arranged in the receive path 320 of the radio-frequency module 300. The low-noise amplifier 340 is intended to amplify, in the compensator-module receive operating mode 821 of the compensator module 200, the wanted signals 610 received via the antenna 250, before the wanted signals 610 are passed to the control module 100 via the wanted-signal connection 210 of the compensator module 200, the antenna cable 600 and the wanted-signal connection 110 of the control module 100. The radio-frequency module 300 could alternatively also comprise other or additional amplifiers and components arranged in the receive path 320. The low-noise amplifier 340 can also be omitted or can be bypassed.

The compensator module 200 comprises a control-data connection 220 and a processing unit 400. The control-data connection 220 is connected to the digital data network 500, to which the control-data connection 120 of the control module 100 is also connected. The control module 100 and the compensator module 200 are thereby connected to one another via the digital data network 500 and can exchange data via the digital data network 500.

The processing unit 400 of the compensator module 200 can comprise a processor or a microcontroller. The processing unit 400 is designed to receive, via the control-data connection 220 of the compensator module 200, and process the control data 510 emitted by the control module 100, which control data indicates whether the control module 100 is in the control-module transmit operating mode 810 or in the control-module receive operating mode 811. The processing unit 400 is designed to switch the compensator module 200 between the compensator-module transmit operating mode 820 and the compensator-module receive operating mode 821 according to the received control data 510. In this process, the processing unit 400 switches the compensator module 200 into the compensator-module transmit operating mode 820 if the control data 510 received from the control module 100 indicates that the control module 100 is in the control-module transmit operating mode 810. In a corresponding manner, the processing unit 400 switches the compensator module 200 into the compensator-module receive operating mode 821 if the control data 510 received from the control module 100 indicates that the control module 100 is in the control-module receive operating mode 811.

As a result, the data transfer system 10 comprising the control module 100 and the compensator module 200 is either in a system transmit operating mode 800, which is shown schematically in Fig. 3, or in a system receive operating mode 801, which is shown schematically in Fig. 3. In the system transmit operating mode 800, the control module 100 is in the control-module transmit operating mode 810, and the compensator module 200 is in the compensator-module transmit operating mode 820. In the system receive operating mode 801, the control module 100 is in the control-module receive operating mode 811, and the compensator module 200 is in the compensator-module receive operating mode 821.

The switching of the compensator module 200 between the compensator-module transmit operating mode 820 and the compensator-module receive operating mode 821 performed by the processing unit 400 comprises switching the radio-frequency module 300 between the transmit path 310 and the receive path 320. The switching between the transmit path 310 and the receive path 320 can be performed by means of a first switch 350 and a second switch 360, for instance, as shown schematically in Fig. 2. In the compensator-module transmit operating mode 820, the transmit path 310 of the radio-frequency module 300 is active. In the compensator-module receive operating mode 821, the receive path 320 of the radio-frequency module 300 is active.

The compensator module 200 comprises a voltage-supply connection 230, which is intended to be connected to an external voltage-supply unit 900. The compensator module 200 can obtain a supply voltage from the external voltage-supply unit 900 via the voltage-supply connection 230, and provide this supply voltage by means of an internal voltage-supply unit 240 to the components of the compensator module 200, for instance to the processing unit 400 and to the radio-frequency module 300.

The compensator module 200 can be designed to detect one or more measured values, which it transfers to the processing unit 400 and processes by means of the processing unit 400. For example, the compensator module 200 can be designed to detect a temperature of the power amplifier 330, a temperature of the low-noise amplifier 340 or another temperature. The compensator module 200 can also be designed to determine a signal level of the wanted signals 610 received from the control module 100 in the system transmit operating mode 800.

The compensator module 200 can be designed such that the processing unit 400 drives the radio-frequency module 300 according to one or more detected measured values. For example, the processing unit may adjust a gain of the power amplifier 330 or of the low-noise amplifier 340 or an attenuation of an attenuator of the radio-frequency module 300 according to one or more measured values.

It can also be provided that the processing unit 400 transfers one or more detected measured values via the control-data connection 220 and the digital data network 500 to the control module 100 or to other network nodes of the digital data network 500.

The compensator module 200 of the data transfer system 10 may be integrated in a motor vehicle control unit 700 intended for another purpose, or may form part of this control unit 700. In this case, individual components of the compensator module 200 in the control unit 700 can also be used for other purposes. For example, the control-data connection 220, the processing unit 400, the voltage-supply connection 230 and the internal voltage-supply unit 240 can also be used for other functions of the control unit 700. Thus the internal voltage-supply unit 240 can also supply other components of the control unit 700 with a supply voltage. The processing unit 400 can also drive other components of the control unit 700. Data other than the control data 510 used by the compensator module 200 can also be exchanged with the digital data network 500 via the control-data connection 220.

The control unit 700 can comprise further components in addition to the described components of the compensator module 200. For example, the control unit 700 can comprise one or more additional antennas 710, for instance a mobile communications antenna, a radio antenna and/or a GNSS antenna.

### List of references

- 10: data transfer system

- 100: control module
- 110: wanted-signal connection
- 120: control-data connection
- 130: transfer unit

- 200: compensator module
- 210: wanted-signal connection
- 220: control-data connection
- 230: voltage-supply connection
- 240: internal voltage-supply unit
- 250: antenna

- 300: radio-frequency module
- 310: transmit path
- 320: receive path
- 330: power amplifier
- 340: low-noise amplifier
- 350: first switch
- 360: second switch

- 400: processing unit

- 500: communications connection
- 505: digital data network
- 510: control data

- 600: antenna cable
- 610: wanted signal

- 700: control unit
- 710: additional antenna

- 800: system transmit operating mode
- 801: system receive operating mode
- 810: control-module transmit operating mode
- 811: control-module receive operating mode
- 820: compensator-module transmit operating mode
- 821: compensator-module receive operating mode

- 900: external voltage-supply unit

## Claims

1. Compensator module (200)
having a wanted-signal connection (210) for transferring wanted signals (610),
a radio-frequency module (300) for amplifying the wanted signals (610),
a control-data connection (220) for receiving control data (510),
and a processing unit (400) for processing the control data (510) and for driving the radio-frequency module (300),
wherein the control-data connection (220) is designed to be connected to a digital data network (500),
wherein the processing unit (400) is designed to switch the radio-frequency module (300) between a compensator-module transmit operating mode (820) and a compensator-module receive operating mode (821) according to the received control data (510).

2. Compensator module (200) according to Claim 1,
wherein the compensator module (200) comprises an antenna (250) for emitting and receiving the wanted signals (610).

3. Compensator module (200) according to any of the preceding claims,
wherein the control-data connection (220) is designed to be connected to an Ethernet-based data network, to a MOST data network or to a CAN data network.

4. Compensator module (200) according to any of the preceding claims,
wherein the wanted-signal connection (210) is designed to be connected to an antenna cable (600).

5. Compensator module (200) according to any of the preceding claims,
wherein the radio-frequency module (300) comprises a transmit path (310) containing a power amplifier (330), and a receive path (320) containing a low-noise amplifier (340),
wherein the transmit path (310) is used in the compensator-module transmit operating mode (820), and the receive path (320) is used in the compensator-module receive operating mode (821).

6. Compensator module (200) according to any of the preceding claims,
wherein the processing unit (400) comprises a processor or a microcontroller.

7. Compensator module (200) according to any of the previous claims,
wherein the compensator module (200) is designed to detect a measured value and to transfer the measured value to the processing unit (400).

8. Compensator module (200) according to Claim 7,
wherein the processing unit (400) is designed to transfer the measured value via the control-data connection (220).

9. Compensator module (200) according to either Claim 7 or Claim 8,
wherein the processing unit (400) is designed to drive the radio-frequency module (300) according to the measured value.

10. Compensator module (200) according to any of the preceding claims,
wherein the compensator module (200) comprises a voltage-supply connection (230).

11. Compensator module (200) according to any of the previous claims,
wherein the compensator module (200) is integrated in a control unit (700) intended for fitting in a motor vehicle.

12. Compensator module (200) according to Claim 11,
wherein the control unit (700) comprises an integral mobile communications antenna, an integral radio antenna and/or an integral GNSS antenna.

13. Control module (100)
having a wanted-signal connection (110),
a control-data connection (120),
and a transfer unit (130), which is designed alternately to emit wanted signals (610) via the wanted-signal connection (110) in a control-module transmit operating mode (810), and to receive wanted signals (610) via the wanted-signal connection (110) in a control-module receive operating mode (811),
wherein the control-data connection (120) is designed to be connected to a digital data network (500),
wherein the transfer unit (130) is designed to emit via the control-data connection (120) control data (510) that indicates whether the control module (100) is in the control-module transmit operating mode (810) or in the control-module receive operating mode (811).

14. Data transfer system (10)
having a compensator module (200) according any of Claims 1 to 12,
and having a control module (100) according to Claim 13,
wherein the wanted-signal connection (210) of the compensator module (200) is connected to the wanted-signal connection (110) of the control module (100), wherein the control-data connection (220) of the compensator module (200) and the control-data connection (120) of the control module (100) are connected to a shared digital data network (500).

15. Method for operating a data transfer system (10) according to Claim 14,
wherein the control module (100) emits via its control-data connection (120) control data (510) that indicates whether the control module (100) is in the control-module transmit operating mode (810) or in the control-module receive operating mode (811),
wherein the compensator module (200) receives the control data (510) via its control-data connection (220),
wherein the processing unit (400) of the compensator module (200) switches the radio-frequency module (300) of the compensator module (200) between the compensator-module transmit operating mode (820) and the compensator-module receive operating mode (821) according to the control data (510).
